# EUROPEAN PATENT SPECIFICATION

(11) **EP 2 423 591 B1**
(45) Date of publication and mention of the grant of the patent: **31.10.2018**
(21) Application number: 11176846.1
(22) Date of filing: 08.08.2011
(51) Int. Cl.: F23D 11/16, F23K 5/10, F23R 3/34

(54) **Method for operating a combustion chamber**
Verfahren zum Betrieb einer Brennkammer
Procédé de fonctionnement d'une chambre de combustion

(30) Priority: 24.08.2010 EP 10173910
(43) Date of publication of application: 29.02.2012
(73) Proprietor: Ansaldo Energia IP UK Limited, London W1G 9DQ (GB)
(72) Inventor: Zajadatz, Martin, 79790 Küssaberg/Dangstetten (DE); Pennell, Douglas Anthony, 5210 Windisch (CH); Döbbeling, Klaus, 5210 Windisch (CH)
(74) Representative: Bernotti, Andrea

(56) References cited:
- EP-A1- 0 974 789
- EP-A1- 1 990 578
- EP-A2- 0 843 083
- DE-A1- 19 855 069
- US-A1- 2009 084 082
- US-A1- 2009 314 000
- US-B2- 7 003 957

## Description

### TECHNICAL FIELD

The present invention relates to a method for operating a combustion chamber.

In particular, the invention refers to a premix combustion chamber of a gas turbine, i.e. a combustion chamber into which a fuel already mixed with an oxidiser is fed.

### BACKGROUND OF THE INVENTION

EP 0 797 051 discloses a premix combustion chamber having mixing devices made of a conical part with tangential slots for air supply and nozzles for fuel supply therein (first stage, gaseous fuel); in addition also a lance for fuel supply is provided (first stage, liquid fuel).

A cylindrical part is then connected downstream of the conical part.

These mixing devices are connected to a combustion device wherein the mixture formed in the mixing devices burns.

In addition, around each mixing device a plurality of nozzles is provided, through which air and fuel are supplied into the combustion chamber (second stage).

During operation at full load air and fuel needed for combustion are supplied partially via the first stage (the largest quantity) and partially via the second stage. This operation mode causes a premix flame to be generated at the first stage, and typically a partially premixed flame at the second stage, with NOₓ, CO emissions and pulsations below the limits.

In contrast, during operation at part load the fuel supplied via the first stage is reduced, but the fuel supplied via the second stage is maintained constant or increased; therefore at part load a large fraction of the fuel is supplied via the second stage.

Since the second stage generates a partially premixed/diffusion flame (that is known to have a much higher temperature than a premix flame), it causes high NOₓ formation; therefore, even if the NOₓ emissions are within the limits, they are higher than at full load.

In addition, since premix burners (first stage) are typically operated close to the lean blow off (LBO, i.e. with a lean mixture, close to the extinction point), at part load (in particular low load) CO emissions and pulsations can be high. Other kinds of combustion chamber are disclosed in documents US7003957, DE18955069, EP0974789, US 2009/084082, US 2009/314000. However, these solutions, at part load, are characterized by high CO emissions and high pulsations.

### SUMMARY OF THE INVENTION

The technical aim of the present invention therefore includes providing a method addressing the aforementioned problems of the known art.

Within the scope of this technical aim, an aspect of the invention is to provide a method that permits an optimised operation, with reduced NOₓ and CO emissions and pulsations in a large load range and for a wide variety of fuels.

The technical aim, together with these and further aspects, are attained according to the invention by providing a method in accordance with the accompanying claims.

### BRIEF DESCRIPTION OF THE DRAWINGS

Further characteristics and advantages of the invention will be more apparent from the description of a preferred but non-exclusive embodiment of the method and combustion chamber illustrated by way of non-limiting example in the accompanying drawings, in which:

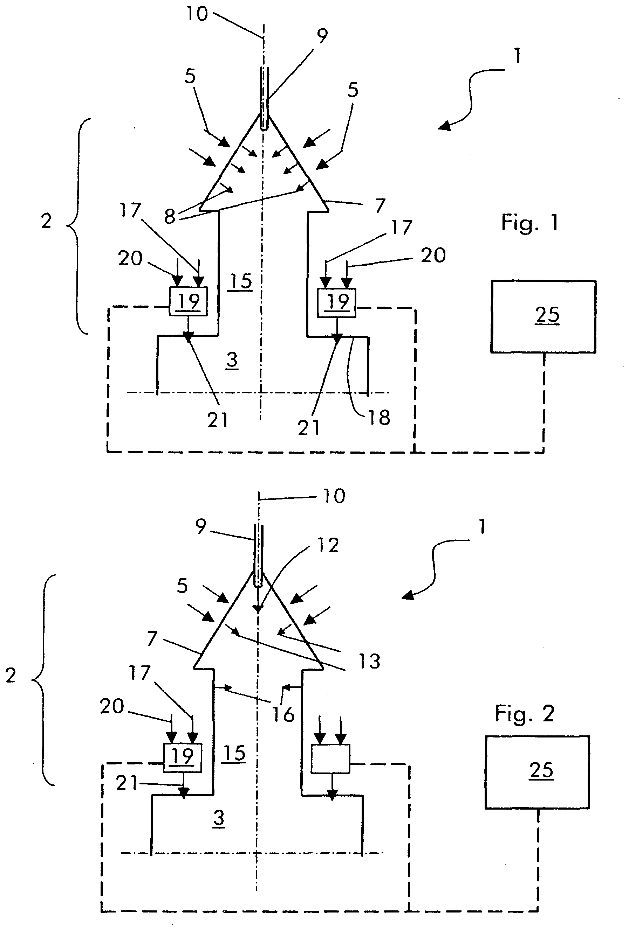

Figure 1 is a schematic view of a combustion chamber operating with gas fuel;
Figure 2 in a schematic view of a combustion chamber operating with liquid fuel (oil);
Figure 3 is a diagram showing the relationship between pulsations and the second stage fuel ratio also called Pilot Fuel Ratio PFR, and NOₓ emissions and PFR; and
Figure 4 shows a combustion chamber with six premixed nozzles which can be operated in a group or individually.

### DETAILED DESCRIPTION OF EMBODIMENTS OF THE INVENTION

With reference to the figures, these show a combustion chamber 1 (of premixed type) having at least a mixing device 2 connected to a combustion device 3; the combustion chamber 1 is part of a gas turbine engine and is therefore operatively connected to a compressor and one or more turbines (according the particular operating structure, these components are not shown).

The mixing device 2 has a first fuel feeding stage, with nozzles to inject fuel into the mixing device and mix it with an oxidiser 5 to then burn it in the combustion device 3.

In particular, the mixing device 2 has a substantially conical body 7 with tangential slots to allow the oxidiser 5 (typically air) to enter therein, and in addition nozzles at the substantially conical body 7 for fuel 8 injection (this is the first stage during operation with gaseous fuel).

In addition, also a lance 9 is centrally provided, extending along a longitudinal axis 10 of the combustion chamber 1; the lance 9 is provided with further nozzles for fuel 12 injection (this is the first stage during operation with liquid fuel).

The first stage may also comprise fuel 13 injection from the substantially conical body 7 together with the fuel 12 (during liquid fuel operation).

Downstream of the substantially conical body 7 the mixing device 2 has a mixing tube 15, through which the oxidiser 5 and fuel 8, 12, 13 of the first stage, emerging from the body 7, pass, further mixing before they enter the combustion device 3.

Additionally, also further fuel 16 may be injected from the mixing tube 10.

The combustion device 3 has a second fuel feeding stage, to inject a fuel 17 into the combustion device 3.

In particular downstream of the mixing tube 15 the combustion chamber 1 has a step with a front plate 18 delimiting the combustion device 3.

The front plate 18 has nozzles for injection of the fuel 17; these nozzles are placed around (preferably symmetrically around) the mixing device 2 (i.e. around the mixing tube 15).

Advantageously, the nozzles of the second fuel feeding stage are connected to a mixer 19 that receives the fuel 17 (second stage) and an inert fluid 20, and mixes them to form a mixture 21 that is then injected into the combustion chamber 1.

The inert fluid 20 is generally a fluid that does not react during mixing.

For example the inert fluid is an inert gaseous fluid, such as N₂, CO₂, water steam, etc. or combination thereof (these inert fluids are preferred when the fuel is a gaseous fuel such as H₂, H₂ containing gases from gasification processes, hydrocarbons, etc.) or an inert liquid fluid such as water (this inert fluid is preferred when the fuel is a liquid fuel such as diesel, fuel oil, kerosene, naphtha, ethanol, methanol, etc.).

Advantageously, a control unit 25 is provided; the control unit 25 receives an information about the gas turbine engine load and is connected to the mixers 19 for regulating the relative amount of inert fluid 20 and fuel 17 in the mixture 21 according to the load of the gas turbine engine.

The operation of the combustion chamber is evident from what described and illustrated and it is substantially the following.

During operation at full load the design amount of fuel 8, 12, 13, 16 via the first stage is introduced into the mixing device 2 generating a premixed flame with low NOₓ emissions; in addition, a design amount of second fuel 17 is also introduced into the combustion device 3 generating a partial premix flame that stabilises ignition of the fuel from the first stage to achieve low CO and UHC emissions.

Therefore globally operation with low NOₓ, CO, UHC emissions is achieved.

When the load of the gas turbine is reduced, the amount of fuel injected into the combustion chamber 1 is reduced accordingly; in particular the fuel 8, 12, 13, 16 of the first stage is reduced, whereas the fuel 17 of the second stage is kept constant or it is even increased (i.e. the PFR is increased, wherein PFR is the ratio between the fuel 17 (i.e. fuel of the second stage) and the total fuel injected into the combustion chamber (fuel of the first and second stage, i.e. fuel 8, 12, 13, 16, 17).

Since the first stage (premixed stage) operates close to LBO (i.e. flame extinction), reduction of the fuel 8, 12, 13, 16 may cause pulsations, high CO and UHC emissions.

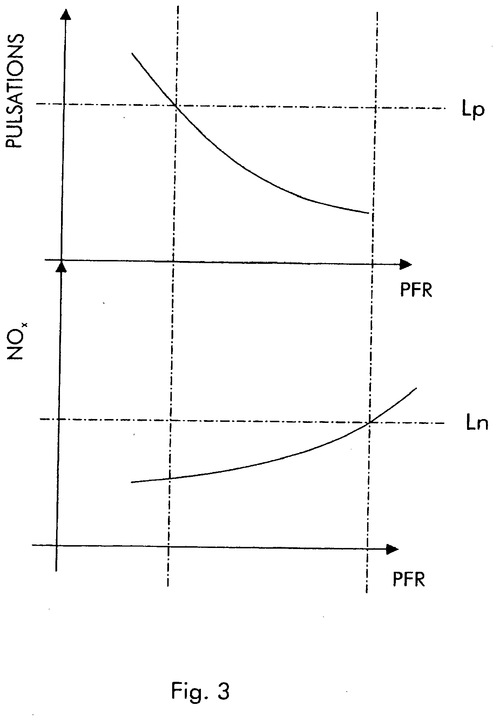

Figure 3 shows a diagram plotting the relationship between pulsations and PFR, and NOₓ and PFR.

From this diagram it can be noticed that the larger the PFR, the lower the pulsations generated in the combustion chamber 1 (this is a beneficial effect) but the larger the NOₓ emissions; in this diagram Lp and Ln indicate the admissible limit for respectively pulsations and NOₓ.

It is clear that if the fuel 8, 12, 13, 16 of the first stage decreases, whereas the fuel 17 of the second stage is kept to a constant level or it is even increased (this is the regulation typically implemented at part load), the PFR increases and the NOₓ emissions increase.

In addition for highly reactive fuels such as H₂, H₂ containing gases from gasification processes, hydrocarbons, etc. (gaseous fuels) or diesel, fuel oil, kerosene, naphtha, ethanol, methanol, etc. (liquid fuels), combustion typically occurs very rapidly as soon as the fuel 17 enters the combustion device 3, before it has the time to mix with the oxidiser 5.

This causes a diffusion flame to be generated and therefore flame temperature very high with consequent further NOₓ generation.

In order to control these NOₓ generation, the fuel (in particular the fuel 17 of the second stage) is mixed with the inert fluid 20.

This has two effects.

First of all since the fuel 17 is diluted with an inert fluid (i.e. a fluid that does not take part in the combustion) the temperature of the gases generated by the fuel combustion is lower and, consequently the NOₓ generated are lower than in case the fuel 17 is not mixed with inert fluid (the higher the combustion temperature the higher the NOₓ emissions and vice versa).

Secondly, since inert fluid is mixed with the fuel 17, the oxygen concentration in the combustion area is reduced and therefore the reactivity (that mainly depends on the temperature and oxygen concentration) is lower than in case only fuel or fuel mixed with air is injected.

Since the reactivity of the mixture of fuel and inert fluid is lower than pure fuel or mixture of fuel and air, the time required for combustion is higher and therefore a better mixing of the fuel with the oxidiser 5 is achieved before the combustion starts (i.e. a premixed flame or an almost premixed flame is generated that causes much less NOₓ emissions than a diffusion flame).

In addition, since the fuel 17 does not burn immediately after injection into the combustion device, combustion is gradual and slower than in case only fuel or fuel with air are injected; this allows also the pulsations be reduced.

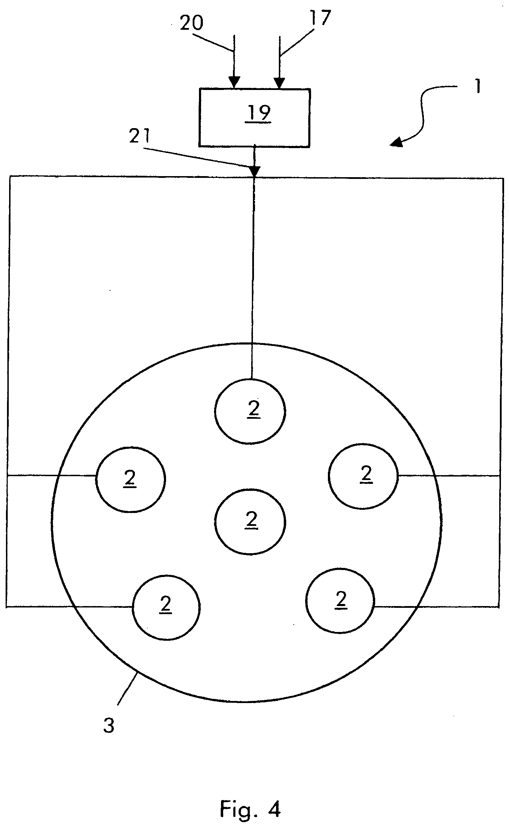

Figure 4 shows a different embodiment of the invention in which the combustion chamber 1 is a can combustor.

In this embodiment, the combustion chamber 1 has six mixing devices 2 (being the premixed nozzles of the can combustor) connected to a combustion device 3.

The mixing devices 2 define at least a first fuel feeding stage (for example the central nozzle defines such a first fuel feeding stage), and at least a second fuel feeding stage (for example the nozzles encircling the central nozzle define the second fuel feeding stage).

Also in this embodiment the second stage has at least a mixer 19 receiving the fuel 17 and an inert fluid 20 to mix them and form a mixture 21 that is then injected into the combustion chamber 1.

The present invention refers to a method for operating a combustion chamber 1 of a gas turbine with at least a first fuel feeding stage and a second fuel feeding stage.

The method comprises mixing the fuel 17 of the second stage with an inert fluid 20 to form a mixture 21 that is then injected into the combustion chamber 1.

Advantageously, the relative amount of inert fluid 20 and fuel 17 in the mixture 21 is regulated according to the load of the gas turbine.

In particular, at part load the amount of inert fluid 20 within the mixture 21 is larger than its amount in the mixture 20 at full load.

Naturally the features described may be independently provided from one another.

In practice the materials used and the dimensions can be chosen at will according to requirements and to the state of the art.

### REFERENCE NUMBERS

1 combustion chamber
2 mixing device
3 combustion device
5 oxidiser
7 conical body
8 fuel
9 lance
10 axis
12 fuel
13 fuel
15 mixing tube
16 fuel
17 fuel
18 front plate
19 mixer
20 inert fluid
21 mixture
25 control unit
Lp admissible limit for pulsations
Ln admissible limit for NOₓ

## Claims

1. Method for operating a combustion chamber (1) having at least a mixing device (2) connected to a combustion device (3), wherein the mixing device (2) has at least a first fuel feeding stage, to mix a fuel (8, 12, 13, 16) with an oxidiser (5) to then burn it in the combustion device (3) generating a premixed flame, wherein the combustion device (3) has at least a second fuel feeding stage to inject fuel (17) therein, **characterised in that** the fuel (17) of the second fuel feeding stage is mixed with an inert fluid (20) to form a mixture (21) that is then injected in the combustion device (3) generating a partial premixed flame that stabilizes the ignition of the fuel from the first fuel feeding stage, wherein
the inert fluid does not take part in the combustion,
the inert fluid is mixed with the fuel (17) so that the oxygen concentration in the combustion area is reduced,
the reactivity of the mixture of fuel and inert fluid is lower than pure fuel or mixture of fuel and air.

2. Method according to claim 1, **characterised by** regulating the relative amount of inert fluid (20) and fuel (17) in the mixture (21) according to the load.

3. Method according to claim 24, **characterised in that** at part load the amount of inert fluid (20) within the mixture (21) is larger than the amount of inert fluid (20) at full load.

4. Method according to claim 1, **characterised in that** the combustion chamber (1) is part of a gas turbine engine.

5. Method according to any of the previous claims, **characterised in that** the fuel (17) of the second fuel feeding stage is a highly reactive fuel such as H₂, H₂ containing gases from gasification process, hydrocarbons, diesel, fuel oil, kerosene, naphtha, ethanol, methanol.

## Patentansprüche

1. Verfahren zum Betreiben einer Brennkammer (1), die mindestens eine Mischvorrichtung (2), die mit einer Verbrennungsvorrichtung (3) verbunden ist, besitzt, wobei die Mischvorrichtung (2) mindestens eine erste Brennstoffzufuhrstufe besitzt, um einen Brennstoff (8, 12, 13, 16) mit einem Oxidationsmittel (5) zu mischen, um ihn dann in der Verbrennungsvorrichtung (3) zu verbrennen, wodurch eine vorgemischte Flamme erzeugt wird, wobei die Verbrennungsvorrichtung (3) mindestens eine zweite Brennstoffzufuhrstufe besitzt, um Brennstoff (17) in sie einzuspritzen, **dadurch gekennzeichnet, dass** der Brennstoff (17) der zweiten Brennstoffzufuhrstufe mit einem Inertfluid (20) gemischt wird, um eine Mischung (21) zu bilden, die dann in die Brennkammer (3) eingespritzt wird, wodurch eine teilweise vorgemischte Flamme erzeugt wird, die die Zündung des Brennstoffs aus der ersten Brennstoffzufuhrstufe stabilisiert, wobei das Inertfluid nicht an der Verbrennung beteiligt ist, das Interfluid mit dem Brennstoff (17) derart gemischt wird, dass die Sauerstoffkonzentration im Verbrennungsbereich verringert wird, und
die Reaktivität der Mischung von Brennstoff und Inertfluid geringer ist, als die von reinem Brennstoff oder einer Mischung von Brennstoff und Luft.

2. Verfahren nach Anspruch 1, **gekennzeichnet durch** Steuern der relativen Menge von Inertfluid (20) und Brennstoff (17) in der Mischung (21) entsprechend der Last.

3. Verfahren nach Anspruch 2, **dadurch gekennzeichnet, dass** die Menge von Inertfluid (20) in der Mischung (21) bei Teillast größer als die Menge von Inertfluid (20) bei Volllast ist.

4. Verfahren nach Anspruch 1, **dadurch gekennzeichnet, dass** die Brennkammer (1) Teil einer Gasturbinenbrennkraftmaschine ist.

5. Verfahren nach einem der vorhergehenden Ansprüche,
**dadurch gekennzeichnet, dass** der Brennstoff (17) der zweiten Brennstoffzufuhrstufe ein hochreaktiver Brennstoff wie z. B. H₂, H₂ enthaltend Gase aus dem Vergasungsprozess, Kohlenwasserstoffe, Diesel, Brennstofföle, Kerosin, Naphtha, Ethanol oder Methanol ist.

## Revendications

1. Procédé de fonctionnement d'une chambre de combustion (1) ayant au moins un dispositif de mélange (2) relié à un dispositif de combustion (3), dans lequel le dispositif de mélange (2) possède au moins un premier étage d'alimentation en combustible, afin de mélanger un combustible (8, 12, 13, 16) avec un oxydant (5) de façon à le brûler ensuite dans le dispositif de combustion (3) en générant une flamme pré-mélangée, dans lequel le dispositif de combustion (3) possède au moins un second étage d'alimentation en combustible destiné à injecter un combustible (17) à l'intérieur, **caractérisé en ce que** le combustible (17) du second étage d'alimentation en combustible est mélangé avec un fluide inerte (20) afin de former un mélange (21) qui est ensuite injecté dans le dispositif de combustion (3) en générant une flamme pré-mélangée partielle qui stabilise l'allumage du combustible provenant du premier étage d'alimentation en combustible, dans lequel
le fluide interne ne participe pas à la combustion,
le fluide inerte est mélangé avec le combustible (17) de sorte que la concentration en oxygène dans la zone de combustion soit réduite,
la réactivité du mélange de combustible et de fluide inerte est inférieure à un combustible pur ou à un mélange de combustible et d'air.

2. Procédé selon la revendication 1, **caractérisé par** la régulation de la quantité relative de fluide inerte (20) et de combustible (17) dans le mélange (21) selon la charge.

3. Procédé selon la revendication 2, **caractérisé en ce que**, en charge partielle, la quantité de fluide inerte (20) dans le mélange (21) est supérieure à la quantité de fluide inerte (20) en pleine charge.

4. Procédé selon la revendication 1, **caractérisé en ce que** la chambre de combustion (1) fait partie d'un moteur à turbine à gaz.

5. Procédé selon l'une quelconque des revendications précédentes, **caractérisé en ce que** le combustible (17) du second étage d'alimentation en combustible est un combustible hautement réactif tel que du H₂, du H₂ contenant des gaz issus d'un processus de gazéification, des hydrocarbures, du diesel, du mazout, du kérosène, du naphta, de l'éthanol, du méthanol.
